# EUROPEAN PATENT APPLICATION

(11) **EP 4 644 338 A1**
(43) Date of publication of application: **05.11.2025**
(21) Application number: 23911771.6
(22) Date of filing: 15.12.2023
(51) Int. Cl.: C02F 1/68, B67D 1/08, B67D 1/12

(54) **SUPPORT SYSTEM, SUPPORT DEVICE, SUPPORT METHOD, AND SUPPORT PROGRAM**

(30) Priority: 28.12.2022 JP 2022211367; 28.12.2022 JP 2022211368; 28.12.2022 JP 2022211369
(71) Applicant: LIXIL Corporation, Tokyo 141-0033 (JP); Suntory Holdings Limited, Osaka-shi, Osaka 530-8203 (JP)
(72) Inventor: FUJII, Kengo, Tokyo 141-0033 (JP); ONISHI, Naokazu, Tokyo 141-0033 (JP); KUSHIMOTO, Atsushi, Tokyo 141-0033 (JP); HASHIBA, Chiaki, Tokyo 141-0033 (JP); HARA, Reina, Tokyo 141-0033 (JP); YAMASHITA, Takafumi, Kawasaki-shi Kanagawa 211-0067 (JP); KONISHI, Sawako, Tokyo 108-0023 (JP); ISHIMODA, Kazuki, Tokyo 108-0023 (JP)
(74) Representative: karo IP
(86) International application number: PCT/JP2023/044970
(87) International publication number: WO 2024/142990

(57) **Abstract**

A support system 1 includes a mineral addition unit that adds a mineral to water from public water supply, a water discharge device that discharges water from public water supply to which a mineral has been added by the mineral addition unit, and a mineral discharge amount acquirer that acquires an amount of a mineral included in water from public water supply discharged from the water discharge device, as a mineral discharge amount.

## Description

### TECHNICAL FIELD

The present disclosure relates to a support system, a control device, and a control program for supporting the use of water.

### BACKGROUND ART

Drinking water is indispensable for human life. The drinking water we consume every day is required not only to be clean, but also to have various functions to support a healthy and prosperous life. For example, there are many types of drinking water on the market, such as natural water collected from groundwater or the like, mineral water with high mineral content, and flavored water with flavors and aromas.

Water supply systems capable of purifying raw water such as tap water and supplying it are also provided. For example, Patent Literature 1 discloses a water supply system that produces purified water by passing raw water supplied from the upstream side through a purification cartridge and that includes a water supply flow path for supplying the purified water to a water supplied part located on the downstream side.

### RELATED-ART LITERATURE

### PATENT LITERATURE

Patent Literature 1: Japanese Unexamined Patent Application Publication No. 2006-239688

### SUMMARY OF INVENTION

### TECHNICAL PROBLEM

To improve the convenience for users of such water supply systems, the inventors have recognized as a problem that a technology for supporting the use of water supplied by the water supply systems is necessary and have conceived the technology of the present disclosure.

The present disclosure has been made in view of such a problem, and a purpose thereof is to provide a technology for supporting the use of water.

### SOLUTION TO PROBLEM

To solve the problem above, a support system according to one embodiment of the present disclosure includes: a mineral addition unit that adds a mineral to water from public water supply; a water discharge device that discharges water from public water supply to which a mineral has been added by the mineral addition unit; and a mineral discharge amount acquirer that acquires an amount of a mineral included in water from public water supply discharged from the water discharge device, as a mineral discharge amount.

Another embodiment of the present disclosure is a support device. This device includes a mineral discharge amount acquirer that acquires, as a mineral discharge amount, an amount of a mineral included in mineral water to which a mineral has been added by a mineral addition unit that adds a mineral to water from public water supply discharged from a water discharge device.

Yet another embodiment of the present disclosure is a support method. This method causes a computer to implement acquiring, as a mineral discharge amount, an amount of a mineral included in mineral water to which a mineral has been added by a mineral addition unit that adds a mineral to water from public water supply discharged from a water discharge device.

Still yet another embodiment of the present disclosure is a support system. This system includes: a mineral addition unit that adds a mineral to water from public water supply; a water discharge device that discharges mineral water to which a mineral has been added by the mineral addition unit; a usage detector that detects an amount of mineral water discharged from the water discharge device, as mineral water usage; and a notification unit that performs notification of mineral water usage detected by the usage detector.

Still yet another embodiment of the present disclosure is a support device. This device includes: a usage detector that detects, as mineral water usage, an amount of mineral water to which a mineral has been added by a mineral addition unit that adds a mineral to water from public water supply discharged from a water discharge device; and a notification unit that performs notification of mineral water usage detected by the usage detector.

Still yet another embodiment of the present disclosure is a support method. This method causes a computer to implement: detecting, as mineral water usage, an amount of mineral water to which a mineral has been added by a mineral addition unit that adds a mineral to water from public water supply discharged from a water discharge device; and performing notification of mineral water usage detected.

Still yet another embodiment of the present disclosure is a support system. This system includes: a mineral addition unit that adds a mineral to water from public water supply; a water discharge device that discharges mineral water to which a mineral has been added by the mineral addition unit; a maintenance time calculation unit that calculates time for maintenance of the mineral addition unit based on an elapsed time from a reference time or usage of the mineral water; a reset unit that resets the reference time when maintenance of the mineral addition unit has been performed; and a reporting unit that reports, when detecting the reference time not being reset even though maintenance of the mineral addition unit has been performed, that fact.

Still yet another embodiment of the present disclosure is a support device. This device includes: a maintenance time calculation unit that calculates, based on an elapsed time from a reference time or usage from the reference time of mineral water to which a mineral has been added by a mineral addition unit that adds a mineral to water from public water supply, time for maintenance of the mineral addition unit; a reset unit that resets the reference time when maintenance of the mineral addition unit has been performed; and a reporting unit that reports, when detecting the reference time not being reset even though maintenance of the mineral addition unit has been performed, that fact.

A further embodiment of the present disclosure is a support method. This method causes a computer to implement: calculating, based on an elapsed time from a reference time or usage from the reference time of mineral water to which a mineral has been added by a mineral addition unit that adds a mineral to water from public water supply, time for maintenance of the mineral addition unit; resetting the reference time when maintenance of the mineral addition unit has been performed; and reporting, when detecting the reference time not being reset even though maintenance of the mineral addition unit has been performed, that fact.

Optional combinations of the aforementioned constituting elements, and implementation of the present invention in the form of methods, apparatuses, systems, recording media, and computer programs may also be practiced as additional modes of the present invention.

### BRIEF DESCRIPTION OF DRAWINGS

[Fig. 1] Fig. 1 is a diagram that illustrates a configuration of a support system according to an embodiment.
[Fig. 2] Fig. 2 is a diagram that illustrates a configuration of a water supply system.
[Fig. 3] Fig. 3 is a diagram that illustrates a configuration of a support device according to the embodiment.
[Fig. 4] Fig. 4 is a flowchart that shows a procedure of a support method according to the embodiment.
[Fig. 5] Fig. 5 is a diagram that shows an example of a screen presented by the support device according to the embodiment.

### DESCRIPTION OF EMBODIMENTS

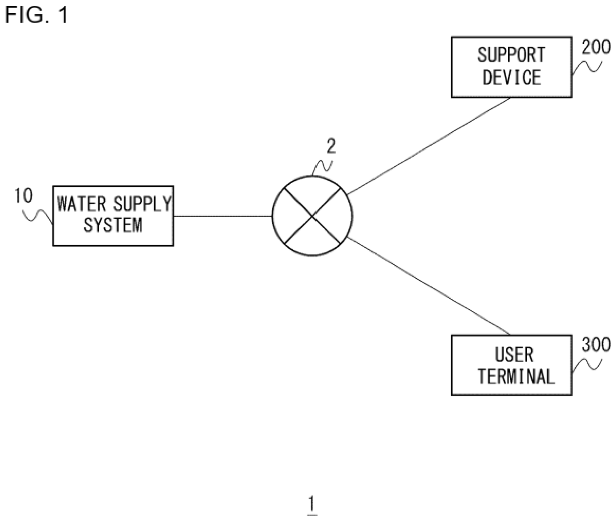

Fig. 1 illustrates a configuration of a support system 1 according to an embodiment. The support system 1 supports the use of water supplied from a water supply system 10. The support system 1 includes the water supply system 10, a support device 200, a user terminal 300, and a communication network 2 that connects these devices so that they can communicate with each other.

The water supply system 10 supplies multiple types of water, such as raw water and modified water. The modified water may be, for example, purified water obtained by removing the chlorine component contained in tap water, or mineral water obtained by adding minerals to raw water or purified water.

The support device 200 supports the use of water supplied from the water supply system 10, using information obtained from the water supply system 10, the user terminal 300, and the like.

The user terminal 300 is a terminal used by a user of the water supply system 10. The user terminal 300 transmits a control instruction received from the user to the water supply system 10. The user terminal 300 transmits information received from the user to the support device 200. The user terminal 300 presents information received from the support device 200 to the user.

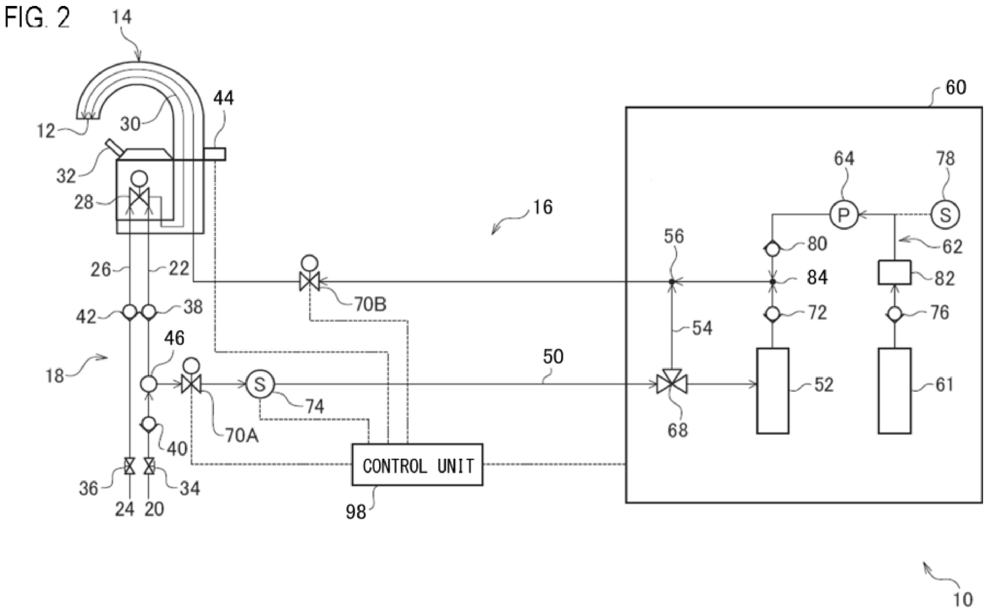

Fig. 2 illustrates a configuration of the water supply system 10. The water supply system 10 includes a mineral purified water unit 60 that produces mineral water. The water supply system 10 is used to supply multiple types of water to a water supplied part 12. The water supplied part 12 of the present embodiment is a water discharge part of a water discharge device 14 that discharges water. Here is shown a water discharge pipe as an example of the water discharge device 14. Alternatively, the water discharge device 14 may be a shower head or the like, for example.

The water supply system 10 includes a first water supply line 16 for supplying modified water to the water supplied part 12, and a second water supply line 18 for supplying mixed hot and cold water, as water of a different type from the modified water, to the water supplied part 12. Both the first water supply line 16 and the second water supply line 18 supply drinking water (modified water and mixed hot and cold water).

The second water supply line 18 includes a water flow path 22 into which room temperature water, which is tap water, is supplied from a water supply source 20 such as public water supply, a hot water flow path 26 into which hot water is supplied from a hot water source 24 such as a water heater, a mixing valve 28 that mixes the room temperature water and the hot water supplied through the water flow path 22 and the hot water flow path 26, and a mixed water flow path 30 that supplies mixed hot and cold water mixed by the mixing valve 28 to the water supplied part 12. The mixing ratio of the room temperature water and hot water in the mixing valve 28 and the flow rate of the mixed hot and cold water supplied from the mixing valve 28 can be controlled using a single lever 32 provided in the water discharge device 14. A first water shut-off valve 34 that can be opened and closed by manual operation is provided in the water flow path 22, and a second water shut-off valve 36 that can be opened and closed by manual operation is provided in the hot water flow path 26. In the water flow path 22, a first check valve 38 and a second check valve 40 are provided with space in between in the flowing direction to prevent backflow to the upstream side. In the hot water flow path 26, a third check valve 42 is provided to prevent backflow to the upstream side.

The first water supply line 16 includes a water supply flow path 50 that branches off from the water flow path 22 and connects to the water supplied part 12, a modification cartridge 52 provided in the water supply flow path 50, a bypass flow path 54 that branches off from the water supply flow path 50 and merges again into the water supply flow path 50 such as to bypass the modification cartridge 52, and a switching valve 68 such as a three-way valve provided at the branch part of the water supply flow path 50 and the bypass flow path 54. A branch part 46 at which the water supply flow path 50 branches off from the water flow path 22 is provided between the first check valve 38 and the second check valve 40 in the water flow path 22. Examples of raw water are not particularly specified and may include natural water and the like besides tap water.

The switching valve 68 can switch the raw water flow path between a via-cartridge section, which passes through the modification cartridge 52 in the water supply flow path 50, and the bypass flow path 54. To supply mineral water to the water supplied part 12, the raw water flow path is switched by the switching valve 68 so that the raw water passes through the modification cartridge 52. To wash a flow path portion on the downstream side of the confluence between the water supply flow path 50 and the bypass flow path 54 using tap water containing chlorine as raw water, the raw water flow path is switched by the switching valve 68 so that the raw water passes through the bypass flow path 54.

The first water supply line 16 also includes a liquid source 61 for storing an undiluted solution of the mineral source, an undiluted solution flow path 62 connecting to the water supply flow path 50, and a liquid sending unit 64 provided in the undiluted solution flow path 62.

Into the water supply flow path 50, raw water with water supply pressure applied thereto is supplied from the water supply source 20 on the upstream side. Into the water supply flow path 50 of the present embodiment, raw water is supplied from the water supply source 20 through the water flow path 22. To the raw water, the undiluted solution is added at a confluence 84 between the water supply flow path 50 and the undiluted solution flow path 62, so that mineral water is produced. The mineral water flows through the downstream side of the confluence 84 between the water supply flow path 50 and the undiluted solution flow path 62 and is supplied to the water supplied part 12. The raw water may be modified by making it pass through the modification cartridge 52 or may not be modified.

In the water supply flow path 50, a fourth check valve 72 is provided on the upstream side of the confluence 84 between the water supply flow path 50 and the undiluted solution flow path 62 to prevent backflow to the upstream side.

The modification cartridge 52 is provided with part of the water supply flow path 50 inside itself and capable of modifying raw water flowing through its interior. The "modifying" as used herein means removing or adding a specific component from or to the raw water through a physical change or a chemical change. The modification cartridge 52 of the present embodiment is a water purification cartridge that removes the chlorine component contained in tap water flowing in as raw water and purifies the raw water to produce purified water. Also, as a modified form of raw water, a beauty component, a fragrant component, a carbonate component, a hydrogen component, or the like may be added to the raw water. The modification cartridge 52 is detachably held in a cartridge holder, which is not illustrated. The water supply system 10 may not include the modification cartridge 52.

The liquid source 61 is detachably held in an undiluted solution holder, which is not illustrated. A specific example of the liquid source 61 is not particularly limited, and one of various containers, tanks, and the like may be employed. The undiluted solution may contain potassium, sodium, calcium, magnesium, phosphorus, and the like, as minerals.

The undiluted solution supplied from the liquid source 61 flows through the undiluted solution flow path 62 to be added to the raw water flowing through the water supply flow path 50. In the undiluted solution flow path 62, a fifth check valve 76 is provided on the upstream side of the liquid sending unit 64. The fifth check valve 76 prevents outside air from flowing to the downstream side in the undiluted solution flow path 62. In the undiluted solution flow path 62, a sensor 78 is also provided to detect the presence or absence of the undiluted solution in the undiluted solution flow path 62. A remaining amount sensor, such as a liquid level sensor, that detects the remaining amount of the undiluted solution may be provided in the liquid source 61.

In the undiluted solution flow path 62, a sixth check valve 80 is provided on the downstream side of the liquid sending unit 64. The sixth check valve 80 prevents backflow to the upstream side in the undiluted solution flow path 62. This can prevent microorganisms and the like mixed into the raw water in the water supply flow path 50 from flowing to the upstream side of the sixth check valve 80 in the undiluted solution flow path 62, thereby favorably maintaining the hygiene of the undiluted solution in the undiluted solution flow path 62. The sixth check valve 80 is configured to open and close, without power supply, in conjunction with whether or not liquid transfer is performed by the liquid sending unit 64. To achieve this, the sixth check valve 80 is configured to open, by means of the internal pressure of the undiluted solution acting from the upstream side, when liquid transfer is performed by the liquid sending unit 64 and to close, by means of the internal pressure of the liquid (such as raw water) acting from the downstream side, when liquid transfer is not performed by the liquid sending unit 64. As the sixth check valve 80, one of various check valves, including a duckbill valve, may be employed.

In the undiluted solution flow path 62, a bacteria removal unit 82 is provided to remove bacteria from the undiluted solution flowing through the undiluted solution flow path 62. The bacteria removal unit 82 is provided with part of the undiluted solution flow path 62 inside itself and removes bacteria from the undiluted solution flowing through the undiluted solution flow path 62 via itself. The bacteria removal unit 82 may be configured to remove bacteria from the undiluted solution with, for example, a hollow fiber membrane filter, a photocatalyst, ultraviolet light, or the like.

The liquid sending unit 64 sends the undiluted solution by discharging the undiluted solution suctioned from the liquid source 61 side toward the water supply flow path 50 side. The liquid sending unit 64 of the present embodiment is driven by a drive voltage or drive current provided from a control unit 98, which will be described later, and continuously sends the undiluted solution so that the instantaneous flow rate of the undiluted solution becomes that corresponding to the drive voltage or drive current. The liquid sending unit 64 here may be driven by the drive voltage. The liquid sending unit 64 of the present embodiment, which implements the above, includes a motor that drives the pump, besides the pump; by increasing the voltage value of the drive voltage for driving the motor, the flow rate of the undiluted solution sent by the pump can be increased. The liquid sending unit 64 may also include, besides the pump, a solenoid that drives the pump, for example, and the flow rate of the undiluted solution may be made changeable according to the drive current driving the solenoid. The pump of the liquid sending unit 64 in the present embodiment is a tube pump; however, one of various other pumps, such as a gear pump and a vane pump, may also be employed. Although the liquid sending unit 64 of the present embodiment is configured with a pump, a specific example thereof is not particularly limited and may be a compressor or the like, for example.

The water supply system 10 includes the switching valve 68 provided in the first water supply line 16, at least one of on-off valves 70A and 70B provided in the water supply flow path 50, the control unit 98 that controls the switching valve 68 and the on-off valves 70A and 70B, and a flow sensor 74 that detects the flow rate of water flowing through the water supply flow path 50.

The switching valve 68 can operate according to the control by the control unit 98. When placed in an OFF state and not energized by the control unit 98, the switching valve 68 switches the raw water flow path to the via-cartridge section. When placed in an ON state and energized by the control unit 98, the switching valve 68 switches the raw water flow path to the bypass flow path 54.

The on-off valves 70A and 70B are provided in the water supply flow path 50. The on-off valves 70A and 70B are automatic on-off valves, such as solenoid valves and electric valves. The on-off valves 70A and 70B can operate according to the control by the control unit 98. The on-off valves 70A and 70B are closed when they are in the OFF state and not energized by the control unit 98. The on-off valves 70A and 70B are opened when they are in the ON state and energized by the control unit 98.

The on-off valves 70A and 70B include an upstream on-off valve 70A and at least one downstream on-off valve 70B located on the downstream side of the upstream on-off valve 70A.

The control unit 98 may be a microcomputer or the like, for example, and constituted by a combination of a CPU, a ROM, a RAM, and the like. The control unit 98 can control the switching valve 68 and the on-off valves 70A and 70B. The control unit 98 can execute a normal mode of operating according to the user's operation on a water supply operation unit 44, and a washing mode in which a downstream flow path portion of the water supply flow path 50 is washed with raw water. When in the washing mode, the control unit 98 disables an instruction output from the water supply operation unit 44.

The water supply operation unit 44 is operated by the user to switch whether or not water supply to the water supplied part 12 is performed. The water supply operation unit 44 of the present embodiment is a rotating handle that can be switched to multiple rotation positions and is incorporated into the water discharge device 14. By getting switched to each of the multiple rotation positions according to the user's operation, the water supply operation unit 44 can output an instruction corresponding to the rotation position to the control unit 98. A specific example of the water supply operation unit 44 is not particularly limited. The water supply operation unit 44 may also be constituted by an information processing terminal (such as a smartphone or a tablet). In this case, the information processing terminal as the water supply operation unit 44 executes an application for operating the water supply system 10 and outputs to the control unit 98 an instruction selected according to an operation on the application.

The water supply operation unit 44 can select one of multiple instructions according to the user's operation and outputs the instruction thus selected to the control unit 98. The instructions selectable by the water supply operation unit 44 include a water supply instruction for supplying water to the water supplied part 12, and a water stop instruction for stopping the water supply to the water supplied part 12.

The control unit 98 sets a parameter related to the drive voltage or drive current (the drive voltage in this example) for driving the liquid sending unit 64 and provides the drive voltage or drive current corresponding to the parameter thus set to the liquid sending unit 64, thereby controlling the flow rate of the undiluted solution sent by the liquid sending unit 64. To achieve this, the control unit 98 of the present embodiment sets, as a parameter related to the drive voltage, the duty ratio of the drive voltage generated by PWM (Pulse Width Modulation) control. Alternatively, the parameter related to the drive voltage may be a voltage value of the drive voltage or the like. When the liquid sending unit 64 is driven by the drive current, a parameter related to the drive current may be a current value of the drive current or the like.

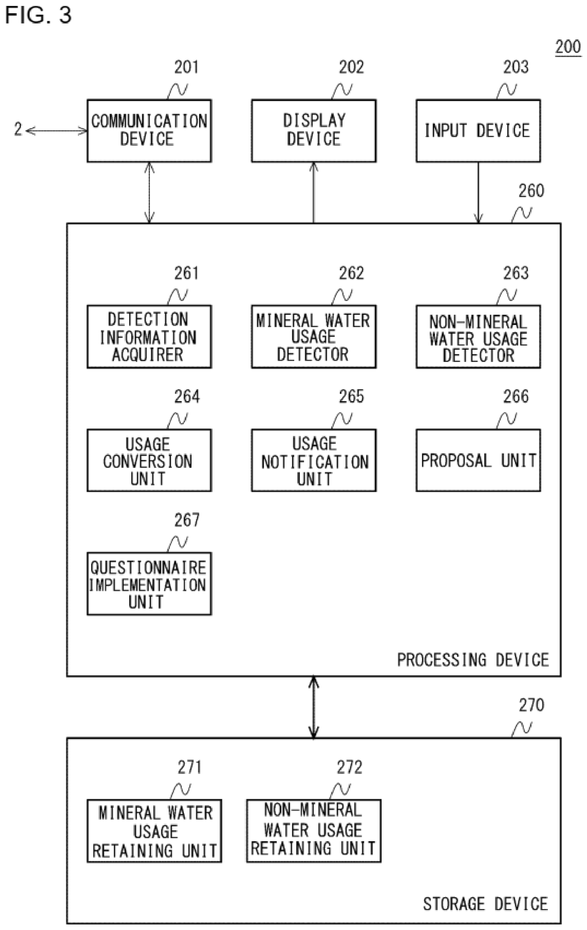

Fig. 3 illustrates a configuration of the support device 200 according to the embodiment. The support device 200 includes a communication device 201, a display device 202, an input device 203, a storage device 270, and a processing device 260. The support device 200 may be a server device, a personal computer, or another device, or may be a mobile terminal, such as a cellular phone terminal, a smartphone, or a tablet terminal.

The communication device 201 controls communication with other devices via the communication network 2. The communication device 201 may perform communication using an arbitrary wired or wireless communication scheme. The display device 202 displays a screen generated by the processing device 260. The display device 202 may be a liquid crystal display device, an organic EL display device, or the like. The input device 203 receives an instruction input and transmits it to the processing device 260. The input device 203 may be a mouse, a keyboard, a touch pad, or the like. The display device 202 and the input device 203 may be implemented as a touch panel.

The storage device 270 stores programs, data, and the like to be used by the processing device 260. The storage device 270 may be semiconductor memory, a hard disk, or the like. The storage device 270 includes a mineral discharge amount retaining unit 271 and a mineral intake retaining unit 272.

The mineral discharge amount retaining unit 271 retains the amount of minerals discharged from the water discharge device 14 in the water supply system 10. The mineral discharge amount retaining unit 271 may retain hourly, daily, weekly, monthly, seasonally, quarterly, semiannually, and yearly mineral discharge amounts or may retain the total amount of minerals discharged up to that point.

The mineral intake retaining unit 272 retains the amount of minerals ingested by the user from the mineral water discharged from the water discharge device 14. The mineral intake retaining unit 272 may retain hourly, daily, weekly, monthly, seasonally, quarterly, semiannually, and yearly mineral intake amounts or may retain the total amount of minerals ingested up to that point. When there are multiple users, the mineral intake retaining unit 272 may retain the mineral intake for each user.

The processing device 260 includes a detection information acquirer 261, a mineral discharge amount acquirer 262, a mineral intake acquirer 263, a notification unit 264, and a calibration unit 265. Each of these configurations may be implemented by any given circuit, a CPU or memory of a computer, an LSI, or the like in terms of hardware, and by a memory-loaded program or the like in terms of software. The functional blocks illustrated here are implemented by coordination thereof. Therefore, it will be understood by those skilled in the art that these functional blocks may be implemented in a variety of forms by hardware only, a combination of hardware and software, and the like.

The detection information acquirer 261 acquires detection information from various sensors provided in the water supply system 10. The detection information acquirer 261 acquires detection information from the flow sensor 74, the sensor 78, and the like.

Based on the detection information acquired by the detection information acquirer 261, the mineral discharge amount acquirer 262 acquires, as the mineral discharge amount, the amount of minerals discharged from the water discharge device 14 in the water supply system 10 and stores the mineral discharge amount thus acquired in the mineral discharge amount retaining unit 271. The mineral discharge amount acquirer 262 may detect, as the mineral discharge amount, the amount of minerals detected by a sensor capable of detecting the amount of minerals. The mineral discharge amount acquirer 262 may estimate the mineral discharge amount based on sensor values detected by various sensors. The mineral discharge amount acquirer 262 may acquire the amount of minerals discharged from the water discharge device 14 based on the flow rate of mineral water detected by the flow sensor 74 when an instruction for discharging the mineral water is provided. The mineral discharge amount acquirer 262 may also acquire the amount of minerals discharged from the water discharge device 14 based on the remaining amount of the undiluted solution detected by the remaining amount sensor that detects the remaining amount of the undiluted solution in the liquid source 61. The mineral discharge amount acquirer 262 may also acquire the amount of minerals discharged from the water discharge device 14 based on the amount of liquid sent by the liquid sending unit 64. The mineral discharge amount acquirer 262 may detect the amount of liquid sent by a pump based on the drive voltage, drive current, operation time, number of operations, and the like of the pump. The mineral discharge amount acquirer 262 may retain in advance a relationship between the drive voltage, drive current, operation time, or number of operations of the pump and the mineral discharge amount and may acquire the amount of minerals discharged from the water discharge device 14 based on the relationship. The mineral discharge amount acquirer 262 may also acquire the amount of minerals discharged from the water discharge device 14 based on the number of operations or operation time of the switching valve 68 provided in a flow path for mineral water. The mineral discharge amount acquirer 262 may retain in advance the amount of minerals that flow when the switching valve 68 is opened once and the amount of minerals that flow when the switching valve 68 is opened for a unit time and may acquire the amount of minerals discharged from the water discharge device 14 based on the amounts of minerals.

Based on the mineral discharge amount acquired by the mineral discharge amount acquirer 262, the mineral intake acquirer 263 acquires, as the mineral intake, the amount of minerals ingested by a user of the mineral water discharged from the water discharge device 14 and stores the mineral intake thus acquired in the mineral intake retaining unit 272. The mineral intake acquirer 263 may presume that the entire amount of the mineral discharge amount acquired by the mineral discharge amount acquirer 262 has been ingested by the user. When there are multiple users, the mineral intake acquirer 263 may acquire information indicating which user uses the mineral water when the mineral water is discharged from the water discharge device 14, from an operation performed on the water supply operation unit 44, information received from the user terminal 300, an image of a user captured by an imaging device installed around the water supply system 10, identification information of a user acquired by a biometric authentication device provided in the water supply system 10, and the like. The mineral intake acquirer 263 may store the mineral discharge amount at that time in the mineral intake retaining unit 272, as the mineral intake of the user. The mineral intake retaining unit 272 may acquire the proportion of mineral water usage of each user from the user terminal 300 or the like and may acquire the mineral intake of each user by prorating the mineral discharge amount based on the proportion thus acquired.

The notification unit 264 notifies the user terminal 300 or the like of the mineral intake acquired by the mineral intake acquirer 263. The notification unit 264 may provide notifications of hourly, daily, weekly, monthly, seasonally, quarterly, semiannually, and yearly mineral intake amounts. This allows the user to grasp the mineral intake amounts and use them to lead a healthy lifestyle. The notification unit 264 may also notify the user terminal 300 or the like of a result of comparison between a mineral intake and a target intake, which is an amount of minerals that the user should ingest. The notification unit 264 may also grant a point or benefit to the user when the user's mineral intake reaches the target intake. This allows the user to control the mineral water usage so as to ingest a moderate amount of minerals.

The notification unit 264 performs notification of at least one of the remaining amount of the undiluted solution of the mineral source to be added to the water from public water supply at a mineral addition unit, the replacement time of the liquid source 61 or bacteria removal unit 82, or the maintenance time of the liquid source 61 or bacteria removal unit 82. The notification unit 264 performs notification of the result of comparison between the replacement time of the liquid source 61 estimated based on the remaining amount of the undiluted solution of the mineral source and the scheduled purchase time of the liquid source 61. The replacement time of the liquid source 61 may also be estimated based on the history of the discharge amount of the mineral source and the current remaining liquid amount. Since the liquid source 61 is a consumable, it may be delivered regularly by the seller. When the difference between the replacement time of the liquid source 61 estimated based on the remaining mineral source liquid amount and the next delivery time is a predetermined value or greater, the notification unit 264 may prompt a change in the delivery time of the liquid source 61. When the estimated replacement time of the liquid source 61 is a predetermined number of days or more earlier than the next delivery time of the liquid source 61, the notification unit 264 may notify the user terminal 300 or the like that the delivery time of the liquid source 61 needs to be advanced. When the estimated replacement time of the liquid source 61 is a predetermined number of days or more later than the next delivery time of the liquid source 61, the notification unit 264 may notify the user terminal 300 or the like that the delivery time of the liquid source 61 may be delayed. Upon receiving the notification from the notification unit 264, the user terminal 300 may display a screen on which the delivery time can be changed, receive a user's instruction to change the delivery time, and request a sales server or the like to change the delivery time. This enables maintenance of the mineral addition unit or replacement of the liquid source 61 or the bacteria removal unit 82 at an appropriate time, thereby preventing a situation where the mineral water cannot be supplied due to a defect in the mineral addition unit or depletion of the undiluted solution. The notification unit 264 may perform notification of the result of comparison between the estimated replacement time of the liquid source 61 and the expiration date of the undiluted solution. When the estimated replacement time of the liquid source 61 is beyond the expiration date of the undiluted solution, the notification unit 264 may communicate that the liquid source 61 should be replaced by the expiration date of the undiluted solution.

The calibration unit 265 calibrates a parameter or the like used by the mineral discharge amount acquirer 262 to estimate the mineral discharge amount. When the liquid source 61 is replaced, the calibration unit 265 acquires the total amount of mineral water used while the liquid source 61 is used, calculates the actual mineral discharge amount using the total amount of mineral water used thus acquired, and compares the actual mineral discharge amount with the mineral discharge amount estimated by the mineral discharge amount acquirer 262. When the actual mineral discharge amount and the estimated mineral discharge amount differ by a predetermined value or more, the calibration unit 265 may calculate the parameter used by the mineral discharge amount acquirer 262 to estimate the mineral discharge amount, such as the amount of minerals that flow when the switching valve 68 is opened once or the amount of minerals that flow when the switching valve 68 is opened for a unit time, based on the actual mineral discharge amount. Accordingly, since the variations of the product can be calibrated, the mineral discharge amount can be obtained more accurately. Therefore, the undiluted solution stored in the liquid source 61 can be used up completely. When the liquid source 61 is replaced, the calibration unit 265 may acquire the amount of the undiluted solution remaining in the liquid source 61 from the user and calculate the actual mineral discharge amount using the remaining amount of the undiluted solution thus acquired. The amount of the undiluted solution remaining in the liquid source 61 may be acquired by measuring the weight of the liquid source 61, for example.

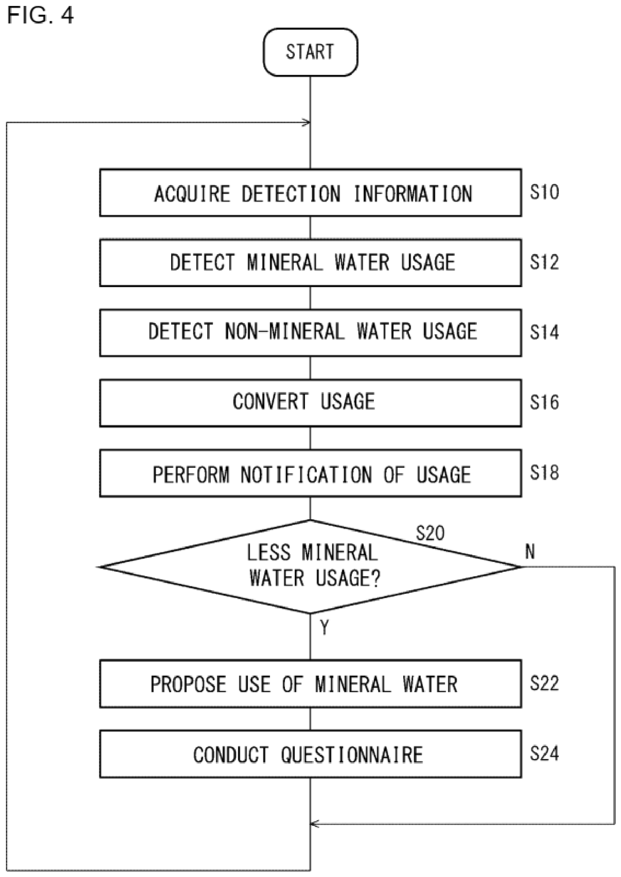

Fig. 4 is a flowchart that shows a procedure of a support method according to the embodiment. The detection information acquirer 261 acquires detection information from various sensors provided in the water supply system 10 (S10). Based on the detection information acquired by the detection information acquirer 261, the mineral discharge amount acquirer 262 acquires, as the mineral discharge amount, the amount of minerals discharged from the water discharge device 14 in the water supply system 10 (S12). Based on the mineral discharge amount acquired by the mineral discharge amount acquirer 262, the mineral intake acquirer 263 acquires, as the mineral intake, the amount of minerals ingested by a user (S14).

The notification unit 264 notifies the user terminal 300 or the like of the mineral intake acquired by the mineral intake acquirer 263 (S16). The notification unit 264 notifies the user terminal 300 or the like of the remaining amount of the mineral undiluted solution stored in the liquid source 61 (S18). The notification unit 264 notifies the user terminal 300 or the like of the replacement time of the liquid source 61 (S20).

When the liquid source 61 is not replaced (N at S22), the process returns to S10 and repeats the abovementioned procedure. When the liquid source 61 is replaced (Y at S22), the calibration unit 265 acquires the actual mineral discharge amount discharged while the liquid source 61 is used and calibrates, based on the actual mineral discharge amount thus acquired, a parameter or the like used by the mineral discharge amount acquirer 262 to acquire the mineral discharge amount (S24). The process returns to S10 and repeats the abovementioned procedure.

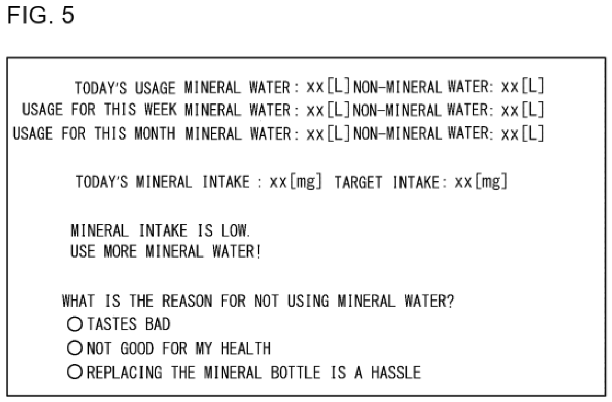

Fig. 5 shows an example of a screen presented by the support device 200 according to the embodiment. The support device 200 displays the mineral intake acquired by the mineral intake acquirer 263 on the user terminal 300. The support device 200 also displays, on the user terminal 300, the remaining amount of the mineral undiluted solution stored in the liquid source 61. The support device 200 also displays the replacement time of the liquid source 61 on the user terminal 300.

There will now be described modifications of constituting elements described above.

Information such as the mineral discharge amount and the mineral intake may be communicated to a server device that accumulates and provides information. The server device may accumulate information communicated by the support device 200 and provide requested information. The information such as the mineral discharge amount and the mineral intake may be provided to medical institutions, sports facilities, restaurants, housing manufacturers, renovation companies, and the like.

The water supply system 10 may not include the second water supply line 18. In this case, to the water supply flow path 50 in the first water supply line 16, raw water such as tap water may be supplied from the water supply source 20.

The on-off valve 70A may be provided in a downstream flow path portion of the water supply flow path 50.

When starting the water supply from the water supply flow path 50 to the water supplied part 12, the control unit 98 may open the on-off valve 70A on the upstream side first and then open the on-off valve 70B on the downstream side. When stopping the water supply from the water supply flow path 50 to the water supplied part 12, the control unit 98 may close the on-off valve 70B on the downstream side first and then close the on-off valve 70A on the upstream side.

The embodiment and modifications described above are intended to be illustrative only. The technical ideas abstracted from the embodiment and modifications should not be interpreted as limited to the content of the embodiment and modifications. Various design modifications, including changes, addition, and deletion of constituting elements, may be made to the content of the embodiment and modifications. In the aforementioned embodiment, matters to which such design modifications may be made are emphasized with the expression of "embodiment". However, design modifications may also naturally be made to matters without such an expression.

### INDUSTRIAL APPLICABILITY

The present invention is applicable to a support system for supporting the use of water.

### REFERENCE SIGNS LIST

1 support system, 2 communication network, 10 water supply system, 12 water supplied part, 14 water discharge device, 16 first water supply line, 18 second water supply line, 20 water supply source, 22 water flow path, 24 hot water source, 26 hot water flow path, 28 mixing valve, 30 mixed water flow path, 32 single lever, 34 first water shut-off valve, 36 second water shut-off valve, 38 first check valve, 40 second check valve, 42 third check valve, 44 water supply operation unit, 46 branch part, 50 water supply flow path, 52 modification cartridge, 54 bypass flow path, 56 confluence, 60 mineral purified water unit, 61 liquid source, 62 undiluted solution flow path, 64 liquid sending unit, 68 switching valve, 70A on-off valve, 70B on-off valve, 72 fourth check valve, 74 flow sensor, 76 fifth check valve, 78 sensor, 80 sixth check valve, 82 bacteria removal unit, 84 confluence, 98 control unit, 200 support device, 201 communication device, 202 display device, 203 input device, 260 processing device, 261 detection information acquirer, 262 mineral discharge amount acquirer, 263 mineral intake acquirer, 264 notification unit, 265 calibration unit, 270 storage device, 271 mineral discharge amount retaining unit, 272 mineral intake retaining unit, 300 user terminal

## Claims

1. A support system, comprising:
a mineral addition unit that adds a mineral to water from public water supply;
a water discharge device that discharges water from public water supply to which a mineral has been added by the mineral addition unit; and
a mineral discharge amount acquirer that acquires an amount of a mineral included in water from public water supply discharged from the water discharge device, as a mineral discharge amount.

2. A support device comprising a mineral discharge amount acquirer that acquires, as a mineral discharge amount, an amount of a mineral included in mineral water to which a mineral has been added by a mineral addition unit that adds a mineral to water from public water supply discharged from a water discharge device.

3. The support device according to Claim 2, wherein the mineral discharge amount acquirer acquires a mineral discharge amount based on the flow rate of mineral water detected by a flow sensor provided in a flow path for mineral water.

4. The support device according to Claim 2, wherein the mineral discharge amount acquirer acquires a mineral discharge amount based on the number of operations or operation time of a valve provided in a flow path for mineral water.

5. The support device according to Claim 2, wherein the mineral discharge amount acquirer acquires a mineral discharge amount based on a remaining amount of a mineral source detected by a remaining amount sensor that detects the remaining amount of a mineral source to be added by the mineral addition unit to water from public water supply.

6. The support device according to Claim 2, wherein the mineral discharge amount acquirer acquires a mineral discharge amount based on an amount of a mineral source sent to be added by the mineral addition unit to water from public water supply.

7. The support device according to Claim 6, wherein the mineral discharge amount acquirer acquires a mineral discharge amount based on the operation time or number of operations of a liquid sending pump that sends the mineral source.

8. The support device according to any one of Claims 2 through 7, further comprising a mineral intake acquirer that acquires, as a mineral intake, an amount of a mineral ingested by a user of mineral water discharged from the water discharge device, based on a mineral discharge amount acquired by the mineral discharge amount acquirer.

9. The support device according to Claim 8, further comprising a notification unit that performs notification of a mineral intake acquired by the mineral intake acquirer.

10. The support device according to Claim 9, wherein the notification unit performs notification of a result of comparison between a mineral intake acquired by the mineral intake acquirer and a target intake representing an amount of a mineral that a user should ingest.

11. The support device according to any one of Claims 2 through 7, further comprising a notification unit that performs notification of at least one of a remaining amount, replacement time, or maintenance time of a mineral source to be added by the mineral addition unit to water from public water supply.

12. The support device according to Claim 11, wherein the notification unit performs notification of a result of comparison between the replacement time of the mineral source estimated based on the remaining amount of the mineral source and scheduled purchase time of the mineral source.

13. The support device according to Claim 12, wherein, when the difference between the estimated replacement time of the mineral source and the scheduled purchase time of the mineral source is a predetermined value or greater, the notification unit prompts a change in the purchase time of the mineral source.

14. The support device according to any one of Claims 2 through 7, further comprising a calibration unit that acquires the total amount of mineral water used while a mineral source to be added by the mineral addition unit to water from public water supply is used or the remaining liquid amount of the mineral source after the use and calibrates, based on the acquired information, a parameter used by the mineral discharge amount acquirer to acquire the mineral discharge amount.

15. A support method causing a computer to implement acquiring, as a mineral discharge amount, an amount of a mineral included in mineral water to which a mineral has been added by a mineral addition unit that adds a mineral to water from public water supply discharged from a water discharge device.

16. A non-transitory computer-readable recording medium encoded with a support program causing a computer to function as a mineral discharge amount acquirer that acquires, as a mineral discharge amount, an amount of a mineral included in mineral water to which a mineral has been added by a mineral addition unit that adds a mineral to water from public water supply discharged from a water discharge device.

17. A support system, comprising:
a mineral addition unit that adds a mineral to water from public water supply;
a water discharge device that discharges mineral water to which a mineral has been added by the mineral addition unit;
a usage detector that detects an amount of mineral water discharged from the water discharge device, as mineral water usage; and
a notification unit that performs notification of mineral water usage detected by the usage detector.

18. The support system according to Claim 17,
wherein the water discharge device discharges non-mineral water to which no mineral has been added,
wherein the usage detector detects an amount of non-mineral water discharged from the water discharge device, as non-mineral water usage, and
wherein the notification unit performs notification of mineral water usage or non-mineral water usage detected by the usage detector.

19. A support device, comprising:
a usage detector that detects, as mineral water usage, an amount of mineral water to which a mineral has been added by a mineral addition unit that adds a mineral to water from public water supply discharged from a water discharge device; and
a notification unit that performs notification of mineral water usage detected by the usage detector.

20. The support device according to Claim 19,
wherein the usage detector detects an amount of non-mineral water, which is discharged from the water discharge device and to which no mineral has been added, as non-mineral water usage, and
wherein the notification unit performs notification of mineral water usage or non-mineral water usage detected by the usage detector.

21. The support device according to Claim 19 or 20, wherein the usage detector detects mineral water usage based on the flow rate of mineral water detected by a flow sensor provided in a flow path for mineral water.

22. The support device according to Claim 19 or 20, wherein the usage detector detects mineral water usage based on a remaining amount of a mineral source detected by a remaining amount sensor that detects the remaining amount of a mineral source to be added by the mineral addition unit to water from public water supply.

23. The support device according to Claim 19 or 20, wherein the usage detector detects mineral water usage based on an amount of a mineral source sent to be added by the mineral addition unit to water from public water supply.

24. The support device according to Claim 23, wherein the usage detector detects mineral water usage based on the operation time of a liquid sending pump that sends the mineral source.

25. The support device according to Claim 19 or 20, wherein the usage detector detects mineral water usage or non-mineral water usage based on the number of operations or operation time of a valve provided in a flow path for mineral water or non-mineral water.

26. The support device according to Claim 19 or 20, wherein the notification unit converts mineral water usage into an amount of purchasable mineral water and performs notification thereof.

27. The support device according to Claim 20, further comprising a proposal unit that presents a proposal on the use of mineral water to a user, based on mineral water usage and non-mineral water usage detected by the usage detector.

28. The support device according to Claim 27, wherein, when the non-mineral water usage is greater than the mineral water usage, the proposal unit proposes the use of mineral water to a user.

29. The support device according to Claim 20, further comprising a questionnaire implementation unit that conducts a questionnaire on the use of mineral water to a user based on mineral water usage and non-mineral water usage detected by the usage detector.

30. The support device according to Claim 29, wherein, when the non-mineral water usage is greater than the mineral water usage, the questionnaire implementation unit conducts a questionnaire to ask a user a reason for the less mineral water usage.

31. A support method causing a computer to implement:
detecting, as mineral water usage, an amount of mineral water to which a mineral has been added by a mineral addition unit that adds a mineral to water from public water supply discharged from a water discharge device; and
performing notification of mineral water usage detected.

32. A non-transitory computer-readable recording medium encoded with a support program causing a computer to function as:
a usage detector that detects, as mineral water usage, an amount of mineral water to which a mineral has been added by a mineral addition unit that adds a mineral to water from public water supply discharged from a water discharge device; and
a notification unit that performs notification of mineral water usage detected by the usage detector.

33. A support system, comprising:
a mineral addition unit that adds a mineral to water from public water supply;
a water discharge device that discharges mineral water to which a mineral has been added by the mineral addition unit;
a maintenance time calculation unit that calculates time for maintenance of the mineral addition unit based on an elapsed time from a reference time or usage of the mineral water;
a reset unit that resets the reference time when maintenance of the mineral addition unit has been performed; and
a reporting unit that reports, when detecting the reference time not being reset even though maintenance of the mineral addition unit has been performed, that fact.

34. A support device, comprising:
a maintenance time calculation unit that calculates, based on an elapsed time from a reference time or usage from the reference time of mineral water to which a mineral has been added by a mineral addition unit that adds a mineral to water from public water supply, time for maintenance of the mineral addition unit;
a reset unit that resets the reference time when maintenance of the mineral addition unit has been performed; and
a reporting unit that reports, when detecting the reference time not being reset even though maintenance of the mineral addition unit has been performed, that fact.

35. The support device according to Claim 34, wherein, when the reference time is not reset after a predetermined period of time has elapsed after the reference time not being reset was reported, the reporting unit again reports that the reference time has not been reset.

36. The support device according to Claim 34 or 35, wherein the reporting unit reports a method for resetting the reference time.

37. The support device according to Claim 34 or 35, wherein the reporting unit reports time for maintenance calculated by the maintenance time calculation unit.

38. A support method causing a computer to implement:
calculating, based on an elapsed time from a reference time or usage from the reference time of mineral water to which a mineral has been added by a mineral addition unit that adds a mineral to water from public water supply, time for maintenance of the mineral addition unit;
resetting the reference time when maintenance of the mineral addition unit has been performed; and
reporting, when detecting the reference time not being reset even though maintenance of the mineral addition unit has been performed, that fact.

39. A non-transitory computer-readable recording medium encoded with a support program causing a computer to function as:
a maintenance time calculation unit that calculates, based on an elapsed time from a reference time or usage from the reference time of mineral water to which a mineral has been added by a mineral addition unit that adds a mineral to water from public water supply, time for maintenance of the mineral addition unit;
a reset unit that resets the reference time when maintenance of the mineral addition unit has been performed; and
a reporting unit that reports, when detecting the reference time not being reset even though maintenance of the mineral addition unit has been performed, that fact.

## Amended claims

### Amended claims under Art. 19.1 PCT

1. A support system, comprising:
a mineral addition unit that adds a mineral to water from public water supply;
a water discharge device that discharges water from public water supply to which a mineral has been added by the mineral addition unit; and
a mineral discharge amount acquirer that acquires an amount of a mineral included in water from public water supply discharged from the water discharge device, as a mineral discharge amount.

2. A support device comprising a mineral discharge amount acquirer that acquires, as a mineral discharge amount, an amount of a mineral included in mineral water to which a mineral has been added by a mineral addition unit that adds a mineral to water from public water supply discharged from a water discharge device.

3. The support device according to Claim 2, wherein the mineral discharge amount acquirer acquires a mineral discharge amount based on the flow rate of mineral water detected by a flow sensor provided in a flow path for mineral water.

4. The support device according to Claim 2 or 3, wherein the mineral discharge amount acquirer acquires a mineral discharge amount based on the number of operations or operation time of a valve provided in a flow path for mineral water.

5. The support device according to any one of Claims 2 to 4, wherein the mineral discharge amount acquirer acquires a mineral discharge amount based on a remaining amount of a mineral source detected by a remaining amount sensor that detects the remaining amount of a mineral source to be added by the mineral addition unit to water from public water supply.

6. The support device according to any one of Claims 2 to 5, wherein the mineral discharge amount acquirer acquires a mineral discharge amount based on an amount of a mineral source sent to be added by the mineral addition unit to water from public water supply.

7. The support device according to Claim 6, wherein the mineral discharge amount acquirer acquires a mineral discharge amount based on the operation time or number of operations of a liquid sending pump that sends the mineral source.

8. The support device according to any one of Claims 2 through 7, further comprising a mineral intake acquirer that acquires, as a mineral intake, an amount of a mineral ingested by a user of mineral water discharged from the water discharge device, based on a mineral discharge amount acquired by the mineral discharge amount acquirer.

9. The support device according to Claim 8, further comprising a notification unit that performs notification of a mineral intake acquired by the mineral intake acquirer.

10. The support device according to Claim 9, wherein the notification unit performs notification of a result of comparison between a mineral intake acquired by the mineral intake acquirer and a target intake representing an amount of a mineral that a user should ingest.

11. The support device according to any one of Claims 2 through 10, further comprising a notification unit that performs notification of at least one of a remaining amount, replacement time, or maintenance time of a mineral source to be added by the mineral addition unit to water from public water supply.

12. The support device according to Claim 11, wherein the notification unit performs notification of a result of comparison between the replacement time of the mineral source estimated based on the remaining amount of the mineral source and scheduled purchase time of the mineral source.

13. The support device according to Claim 12, wherein, when the difference between the estimated replacement time of the mineral source and the scheduled purchase time of the mineral source is a predetermined value or greater, the notification unit prompts a change in the purchase time of the mineral source.

14. The support device according to any one of Claims 2 through 13, further comprising a calibration unit that acquires the total amount of mineral water used while a mineral source to be added by the mineral addition unit to water from public water supply is used or the remaining liquid amount of the mineral source after the use and calibrates, based on the acquired information, a parameter used by the mineral discharge amount acquirer to acquire the mineral discharge amount.

15. A support method causing a computer to implement acquiring, as a mineral discharge amount, an amount of a mineral included in mineral water to which a mineral has been added by a mineral addition unit that adds a mineral to water from public water supply discharged from a water discharge device.
